# EUROPEAN PATENT APPLICATION

(11) **EP 4 657 277 A1**
(43) Date of publication of application: **03.12.2025**
(21) Application number: 25177299.2
(22) Date of filing: 19.05.2025
(51) Int. Cl.: G06F 16/242, H04L 51/02, G06F 16/3329

(54) **ENABLING CONSENT IN A GROUP COMMUNICATION WITH MULTIPLE LLM AGENTS**

(30) Priority: 31.05.2024 US 202418731104
(71) Applicant: Microsoft Technology Licensing, LLC, Redmond, WA 98052-6399 (US)
(72) Inventor: Maheshwari, Rajiv Kumar, Redmond, WA, 98052-6399 (US)
(74) Representative: Grünecker Patent- und Rechtsanwälte PartG mbB

(57) **Abstract**

Security, privacy, and data use restrictions in group communication with multiple large language model (LLM) chatbots or agents are provided. In-context user consent is obtained for operations performed by LLM agents on behalf of the user as and when needed. A first message directed to a first LLM agent is received via a user interface (UI). Based on a determination that the first message is to invoke a second LLM agent, a consent request for consent of a user to invoke the second LLM agent is provided via the UI. Upon receiving the consent of the user to invoke the second LLM agent, the second LLM agent is invoked within the context of the UI. In some examples, a command to enter private mode may be received to limit the communication in the private mode only selected LLM agents.

## Description

### BACKGROUND

Artificial intelligence (AI) systems are inherently compositional. A typical commercial AI system includes several components in their architecture such as large language models, mixture of expert models, plugins, webtools, sandbox, frontend application, search engines, databases (e.g., vector, graph), function calling, and other conventional software components. However, lateral data sharing between these components potentially compromises security, privacy, safety, and limited use of copyrighted or proprietary content. Further, AI systems are non-deterministic in contrast to traditional computing systems that are usually deterministic or predictable. A non-deterministic system is one in which the next state or outcome of the system is not uniquely determined by its current state and inputs. This means that multiple outcomes are possible for a given set of conditions. Non-deterministic systems introduce uncertainty into the system's behavior, which can complicate security guarantees because it is harder to precisely predict and control the system's behavior. This uncertainty can be exploited by attackers to undermine security measures.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A computerized method for enabling security, privacy, and data use restrictions in group communication with multiple large language model (LLM) chatbots or LLM agents is described. A first message directed to a first LLM agent is received via a user interface. The first message is analyzed to determine that the first message is to invoke a second LLM agent. Based on the determining, a consent request for consent of a user to invoke the second LLM agent is provided via the user interface. The consent of the user to invoke the second LLM agent is received within the context of the user interface. Upon receiving the consent of the user to invoke the second LLM agent, the second LLM agent is invoked within the context of the user interface.

### BRIEF DESCRIPTION OF THE DRAWINGS

The present description will be better understood from the following detailed description read considering the accompanying drawings, wherein:
FIG. 1 illustrates a block diagram of an example system for enabling security, privacy, and data use restrictions in group communication with multiple large language model (LLM) chatbots or LLM agents;
FIG. 2 illustrates a block diagram of an example architecture for enabling security, privacy, and data use restrictions in group communication with multiple LLM chatbots or LLM agents;
FIG. 3 illustrates an example sequence diagram of interaction between entities shown in the architecture of FIG. 2;
FIGS. 4-6 are flowcharts illustrating example methods for enabling security, privacy, and data use restrictions in group communication with multiple LLM chatbots or LLM agents;
FIGS. 7-10 illustrate an example user interface (UI) for enabling security, privacy, and data use restrictions in group communication with multiple LLM chatbots or LLM agents; and
FIG. 11 illustrates an example computing apparatus as a functional block diagram.

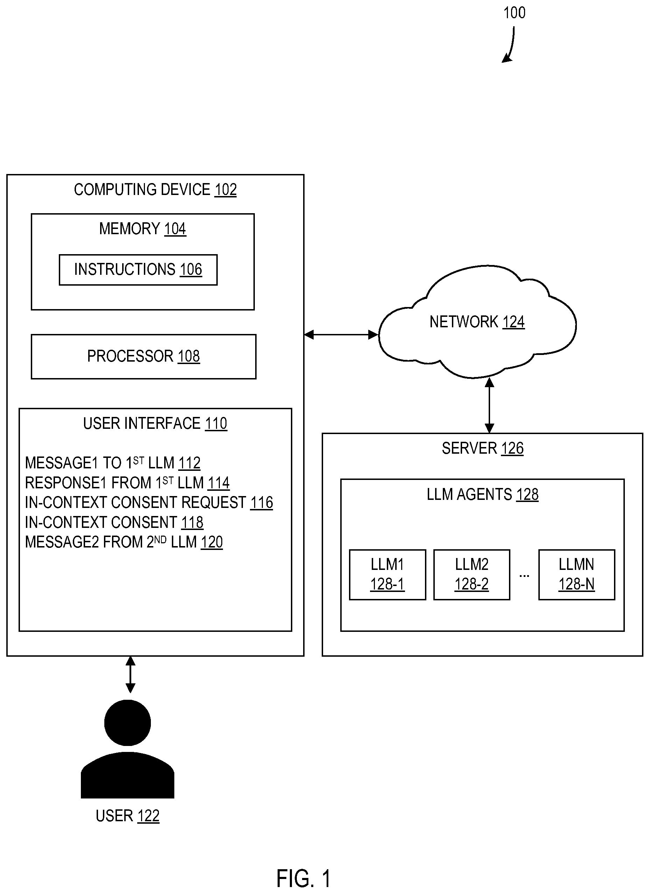

Corresponding reference characters indicate corresponding parts throughout the drawings. In FIGS. 1 to 11, the systems are illustrated as schematic drawings. The drawings may not be to scale. Any of the figures may be combined into a single example or embodiment.

### DETAILED DESCRIPTION

Multiple large language model (LLM) chatbots or LLM agents working together in the same communication session with a user to answer complex queries and solve complex problems provides a human-like interaction. However, data sharing between the multiple LLM agents potentially compromises security, privacy, safety of data, including sensitive, copyrighted, or proprietary content. Users may not be aware of how their messages are interpreted, further expanded, and shared across the multiple LLM agents, and how the responses from one LLM agent are resubmitted to other LLM agents to synthesize more relevant answers for the user. Private and confidential information may get exposed to other LLM agents without user's consent. Licensed and/or copyrighted content only available for user's use may be used by other LLM agents in a non-compliant way. The risks substantially increase in consumer AI scenarios which may involve third party LLM agents and plugins. The AI generated and unstructured nature of content also brings unique technical challenges to accurately define the scope of access and origin of content shared between LLM agents.

In contrast, examples of the disclosure provide functionality that enables a user to have a group chat with multiple LLM agents such that the user has full control and transparency as to which LLM agents and other AI system components can access what parts of the chat message history. The functionality handles customer authentication and authorization (e.g., using OpenID Connect and Oauth2.0 industry standards). In some examples, the functionality is implemented as a security module, component, plugin, or other logic. The security module obtains and handles in-context customer consent, as further described herein. In some examples, the security module also handles legal and regulatory compliance and data use restrictions for copyrighted or proprietary content. The security module may be digitally signed and distributed securely. In some examples, the security module is implemented as an AI system component, a service, or an Open API plugin.

In some examples, a first message directed to a first LLM chatbot is received. A response to the first message from the first LLM chatbot is provided via a user interface. One or more of the first message and the response are analyzed. Based on the analysis, a consent request to obtain consent of a user to invoke a second LLM chatbot is provided via the user interface. The consent of the user to invoke the second LLM chatbot is received within the context of the user interface. Upon receiving the consent of the user to invoke the second LLM chatbot, the second LLM chatbot is invoked within the context of the user interface. In this way, the user is offered control and transparency over what parts of communication between the user and the LLM chatbot are allowed to be shared with other LLM chatbots, including intermediate execution steps that may inadvertently invoke a LLM agent to perform an unauthorized operation (e.g., invoke an email LLM agent to send an email).

In some examples, a first communication between a user and a first LLM agent is received via a user interface. A command to enter a private mode, in which communication is limited to one or more LLM agents selected by the user, is received via the user interface. The command may be received while the user is communicating with the first LLM agent. In response to the command, the private mode is entered for the communication session. The user then selects which LLM agents are allowed to have access and, in some examples, to which portions of the communication history. In addition to providing security by restricting the communication to only selected LLM agents in the private mode, examples of the disclosure advantageously reduce network bandwidth at least because the communication in the private mode is not passed on to the other LLM agents which may have been party to the communication session with the user before the user invoked the private mode. This improves the functioning of the underlying computing device.

FIG. 1 is a block diagram illustrating a system 100 for enabling security, privacy, and data use restrictions in group communication with multiple LLM chatbots or LLM agents 128. The terms LLM chatbot and LLM agent are used interchangeably herein without deviating from the disclosure. While the LLM chatbots or LLM agents 128 (e.g., first LLM agent 128-1, second LLM agent 128-2, and the Nth LLM agent 128-N) are shown hosted on a server 126, the LLM agents 128 may be distributed over the network 124 on different servers. In some examples, one or more of the LLM agents 128 may be on the computing device 102 without deviating from the disclosure.

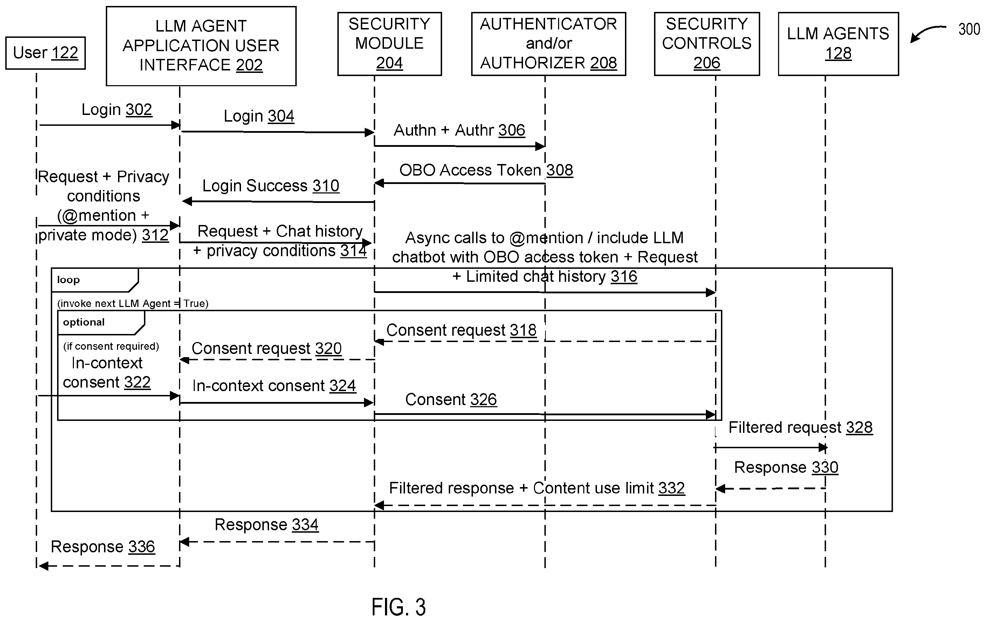

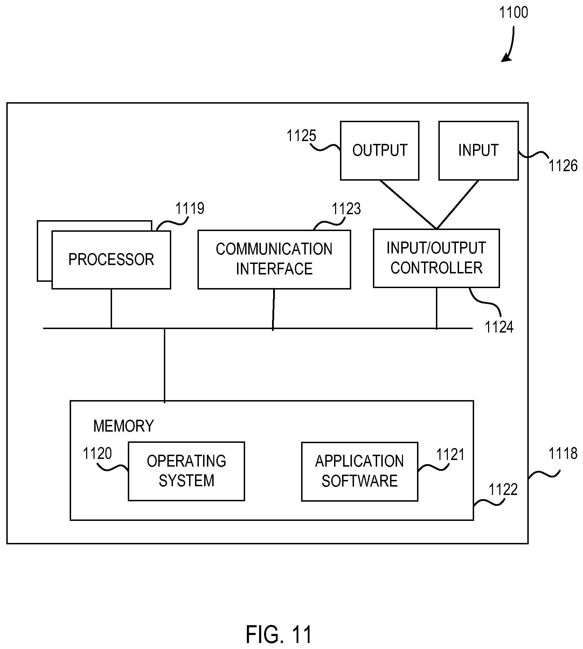

A user 122 interacts with a computing device 102 (e.g., implemented on a computing apparatus 1118 in FIG. 11), comprising a user interface 110, a processor 108, and a memory 104. The memory 104 stores instructions 106 that upon execution by the processor 108 perform operations described in FIGS. 3-10.

In an example, the user interface 110 shows a first message directed to a first LLM agent 128-1 at 112 and a first response from the first LLM agent 128-1 at 114. Upon analyzing the first message and/or the first response, a consent request for invoking a second LLM agent 128-2 is presented in-context at 116. If in-context consent is received from the user 122 at 118, a second message from the second LLM agent 128-2 is presented at 120. Thus, the user 122 is always aware of the LLM agents 128 with which the conversation is shared thereby ensuring the security of chat history of the user 122 when communicating with multiple LLM agents 128. For example, if the user 122 sees a consent request for any unintended or malicious operation (e.g., service, plugin, or a LLM agent), the user 122 can prevent that unintended or malicious operation by declining to provide consent.

In some examples, a first message directed to a first LLM chatbot 128-1 is received. A response to the first message from the first LLM chatbot 128-1 is provided via a user interface 110. One or more of the first message and the response are analyzed and based on the analysis, a consent request for consent of a user 122 to invoke a second LLM chatbot 128-2 is provided via the user interface 110. The consent of the user 122 to invoke the second LLM chatbot 128-2 is received within the context of the user interface 110. Upon receiving the consent of the user 122 to invoke the second LLM chatbot 128-2, the second LLM chatbot 128-2 is invoked within the context of the user interface 110 e.g., by providing a message in the user interface 110 from the second LLM chatbot 128-2 for the user 122.

In some examples, upon receiving the consent of the user to invoke the second LLM chatbot, a second message from the user 122 directed to the second LLM chatbot 128-2 is received via the user interface 110. At least a portion of the second message is sent to the second LLM chatbot 128-2. A response to the second message is received from the second LLM chatbot 128-2. The response to the second message from the second LLM chatbot 128-2 is provided via the user interface 110 to the user 122.

At any stage of communication with the LLM agents 128, a command may be received from the user 122 via the user interface 110 to turn on private mode. In some examples, the private mode is turned on without selecting any of the LLM chatbots 128 and the user can select one or more of the LLM chatbots 128 for communication in the private mode. In some other examples, the first LLM chatbot 128-1 (e.g., main LLM chatbot) is automatically selected for communication in the private mode and one or more of the other LLM chatbots 128 may be selected by the user 122. In some other examples, the first LLM chatbot 128-1 (e.g., main LLM chatbot) is automatically selected for communication in the private mode and the second LLM chatbot 128-2 may be automatically selected based on in-context consent of the user 122 for invoking the second LLM chatbot 128-2. In some other examples, all the LLM chatbots 128 with which the user 122 is in communication in the current session are automatically selected and the user can deselect one or more of the LLM chatbots 128 if the user 122 does not wishes to share the communication context to such LLM chatbots.

In some examples, the decision to automatically select or not select from the LLM chatbots 128 is performed using machine learning techniques. For example, an auto-selection model is trained based on historical user inputs to deselect or select from the automatically selected or not selected LLM chatbots 128, respectively. The user 122 may be prompted to confirm or override this selection such that the selection from the LLM chatbots 128 is transparent to the user 122 and the user 122 may override it at any point in the chat conversation. As another example, when the user 122 always selects a particular LLM chatbot 128-N (e.g., for keeping a log of the communication in private mode), the auto-selection model is trained to automatically select LLM chatbot 128-N for communication in the private mode.

When in the private mode, a selection of one or more of the first LLM chatbot 128-1 and the second LLM chatbot 128-2 for communicating with the user 122 in the private mode is received. The communication in the private mode is limited to the selected one or more of the first LLM chatbot 128-1 and the second LLM chatbot 128-2. The communication between the user 122 and the selected one or more of the first LLM chatbot 128-1 and the second LLM chatbot 128-2 in the private mode is analyzed. Based on the analysis of the communication, another consent request for consent of the user 122 to invoke a third LLM chatbot (e.g., 128-N as shown in FIG. 1) in the private mode is provided via the user interface 110. The consent of the user 122 to invoke the third LLM chatbot 128-N within the context of the user interface is received via the user interface 110. Upon receiving the consent of the user 122 to invoke the third LLM chatbot 128-N, the third LLM chatbot 128-N is automatically selected for communicating with the user 122 within the context of the user interface in the private mode. Now, the communication in the private mode is limited to the third LLM chatbot 128-N and the selected one or more of the first LLM chatbot 128-1 and the second LLM chatbot 128-2.

In some examples, a command from the user 122 to turn off the private mode is received via the user interface 110 and the private mode is turned off in response to the command. Upon turning off the private mode, the communication context between the user 122 and the first, second, or third LLM chatbots (e.g., 128-1, 128-2, or 128-N) is not carried forward. In some examples, the user interface 110 provides an option to search, add, or remove a LLM chatbot from the LLM chatbots 128. The option to search, add, or remove a LLM chatbot from the LLM chatbots 128 is provided in a first portion of the user interface 110 and the communication context of communication between the user and the LLM chatbots 128, whether in private mode or normal mode, is provided in a second portion of the user interface 110.

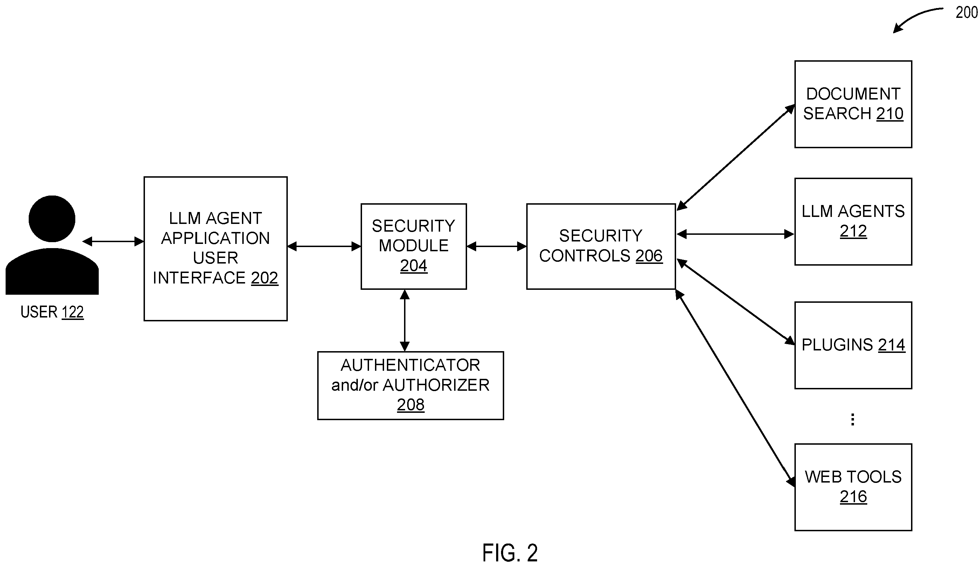

FIG. 2 is a block diagram 200 of an example architecture for enabling security, privacy, and data use restrictions in group communication with multiple LLM chatbots or LLM agents 128. The user 122 interacts with the LLM chatbot or LLM agent application user interface 202 (e.g., user interface 110 in FIG. 1). Any communication of the user 122 with the LLM agent application user interface 202 is passed to the security module 204. For examples, if the user 122 logins into the LLM agent application user interface 202, this communication is passed to an authenticator and/or authorizer 208. If the user wants to communicate with any of the LLM agents 212, the communication between the user 122 and the LLM agents 212 (or any other functionality such as document search 210, plugins 214, web tools 216, and the like) is passed via the security module 204 and the security controls 206. In some examples, the security module 204 and the security controls 206 may be integrated together (not shown) or may be separate (as illustrated in FIG. 2).

For example, if the user 122 is communicating with one of the LLM agents 212, that LLM agent may invoke a functionality such as a document search 210, a plugin 214 (e.g., to send an email, copy files from the computing device 102, etc.), or a web tool 216. In such scenarios, as the communication is passed via the security module 204 and security controls 206, in-context consent of the user 122 is required to invoke any functionality that is not within the current scope of security and privacy.

FIG. 3 illustrates an example sequence diagram 300 of interaction between entities shown in the architecture of FIG. 2. At 302, user 122 logins in the LLM chatbot or the LLM agent application user interface 202. At 304, the login is passed to the security module 204 that passes the login credentials for authentication and/or authorization to the authenticator and/or authorizer 208 at 306. The authenticator and/or authorizer 208 returns an on-behalf-of (OBO) access token to the security module 204 at 308. At 310, a login successful message is provided to the LLM agent application user interface 202.

Upon successful login, at 312, the user 122 may interact with the LLM agent application user interface 202 to provide a message comprising one or more of a request and privacy conditions including mentioning a particular LLM agent and private mode information. The LLM agent application user interface 202 provides the request, chat history, and the privacy conditions to the security module at 314. In some examples, only the request is provided if there is no chat history and private mode turn-on indication is not provided. In some other examples, only a private mode turn-on indication is provided.

At 316, the request with the OBO access token and limited chat history is sent to the security controls 206. The OBO access token indicates to the security controls 206 that the security module 204 is sending this message on-behalf-of the authenticated user 122. At 318, security controls 206 determines if in-context consent of the user 122 is required to invoke any functionality that is not within the current scope of security and privacy, and if yes, it sends a consent request to the security module 204 (e.g., using the OBO access token) which sends the consent request in-context to the LLM agent application user interface 202 at 320.

In some examples, at 318, in-context consent of the user 122 is not required if user consent was already received for a certain LLM agent within the current scope of security and privacy. At 322, the user 122 provides in-context consent to the LLM agent application user interface 202 which is received by the security module 204 at 324. The consent is sent by the security module 204 to the security controls 206 at 326. If the user 122 denies a particular consent request, system 100 may suggest alternative manual or automated approaches to accomplish the same task.

At 328, the security controls 206 sends a filtered request (applying security, privacy, safety, and data use restriction policies as applicable to the request) to one of the LLM agents 128 (e.g., the one that is mentioned as @mention). At 330, the security controls receives a response to the filtered request from one of the LLM agents 128. At 332, the security controls 206 sends a filtered response (applying security, privacy, safety, and data use restriction policies as applicable to the response) and any applicable Content use limit to security module 204. The operations 316-332 may repeat several times as LLM agents invoke other LLM agents before the Response 334 is sent back to the LLM agent application user interface 202. While the operations 316-332 are illustrated as a loop, multiple LLM agents 128 can be invoked in parallel in accordance with the dependency execution graph e.g., based on interdependency of the LLM agents 128.

The content use limit defines the restrictions on the usage of content depending on the context. For example, due to the content use limit, the content can only be shared with user but not any other LLM agents, and hence, security controls 206 would filter out the content in filtered request 328 to any subsequently invoked LLM agents 128 in the operations 316-332 loop. At 334, the security module 204 provides the response to the LLM agent application user interface 202 for providing to the user at 336.

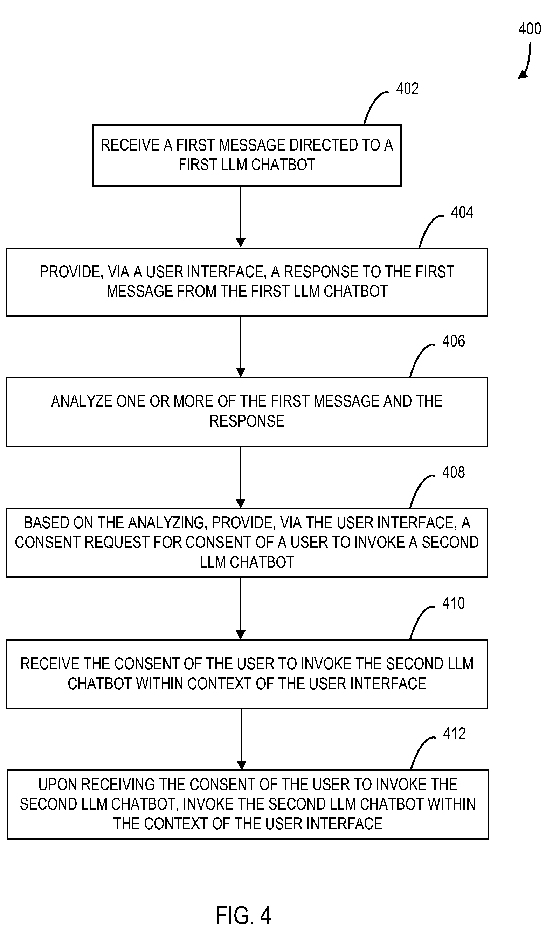

FIG. 4 is a flowchart illustrating an example method 400 for enabling security, privacy, and data use restrictions in group communication with multiple LLM chatbots or LLM agents. In some examples, the method 400 is executed or otherwise performed in a system such as system 100 of FIG. 1.

At 402, a first message directed to a first LLM chatbot is received. At 404, a response to the first message from the first LLM chatbot is provided via a user interface (such as user interface 110 or LLM chatbot application user interface 202). At 406, one or more of the first message and the response are analyzed. In some examples, along with the first message and response, a portion of the chat history of communication of the user (e.g., the last five messages) is also analyzed and it is determined that a second LLM chatbot will provide a better solution or answer to user's messages. The second LLM chatbot may be selected based on confidence score of the second LLM chatbot being greater or more than the confidence scores of other LLM chatbots to provide a solution or an answer to the user's messages in this session. In some examples, the second LLM chatbot may be selected based on instructions obtained by the first LLM via Retrieval Augmented Generation (RAG), which involves searching knowledge sources such as documents and websites using a portion of the chat history of communication of the user and other contextual information as a query, and then using LLM to generate set of instructions based on the search results, to be executed to accomplish the user request.

At 408, based on the analyzing, a consent request for consent of a user to invoke a second LLM chatbot is provided via the user interface. The consent request is provided in-context of the user interface. At 410, the consent of the user to invoke the second LLM chatbot is received within the context of the user interface. At 412, the second LLM chatbot is invoked within the context of the user interface upon receiving the consent of the user to invoke the second LLM chatbot. In some examples, upon invoking the second LLM chatbot, the user engages in communication with the second LLM chatbot.

In some examples, a command is received, via the user interface, from the user to turn on private mode. A selection of one or more of the first LLM chatbot and the second LLM chatbot for communicating with the user in the private mode is additionally received such that the communication in the private mode is limited to the selected one or more of the first LLM chatbot and the second LLM chatbot. In private mode, no LLM chatbot other than the selected one or more of the first LLM chatbot and the second LLM chatbot can access the communication context in the private mode or perform any functionality without consent of the user in the private mode.

The communication between the user and the selected one or more of the first LLM chatbot and the second LLM chatbot in the private mode is analyzed and another consent request for consent of the user to invoke a third LLM chatbot in the private mode is provided via the user interface based on the analysis of the communication. If the consent of the user to invoke the third LLM chatbot within the context of the user interface is received via the user interface, the third LLM chatbot is automatically invoked for communicating with the user within the context of the user interface in the private mode such that the communication in the private mode is limited to the third LLM chatbot and the selected one or more of the first LLM chatbot and the second LLM chatbot.

In some examples, a command is received from the user to turn on private mode when the user is communicating with the second LLM chatbot. In response to the command, the private mode is turned on and the second LLM chatbot is automatically selected to communicate with the user in the private mode. When a command is received from the user to turn off the private mode, the private mode is turned off such that the communication context between the user and the first, second, or third LLM chatbots is not carried forward upon turning off the private mode.

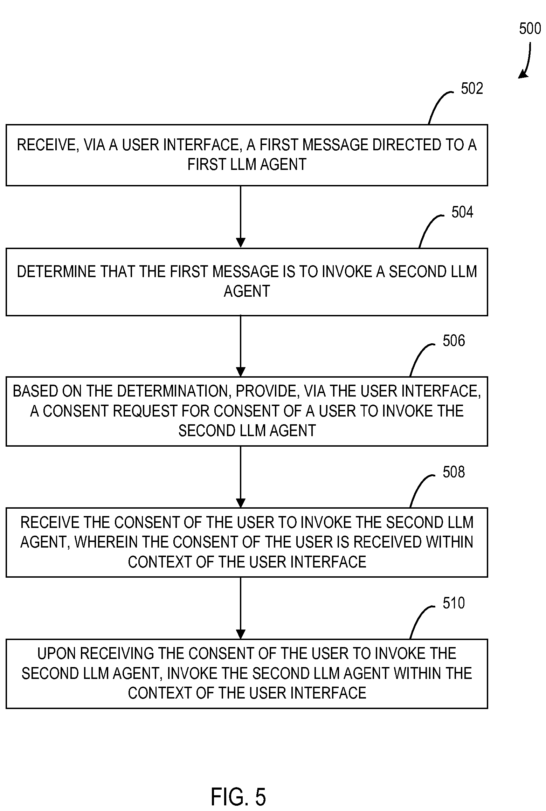

FIG. 5 is a flowchart illustrating an example method 500 for enabling security, privacy, and data use restrictions in group communication with multiple LLM chatbots or LLM agents. In some examples, the method 500 is executed or otherwise performed in a system such as system 100 of FIG. 1. At 502, a first message directed to a first LLM agent is received via a user interface (such as user interface 110 or LLM agent application user interface 202). The first message includes a privacy condition, and a message history of the user and the first LLM agent based on the privacy condition. The message history of the user and the first LLM agent is secured from the second LLM agent based on the privacy condition e.g., when the private mode is turned on.

At 504, the first message is determined to invoke a second LLM agent e.g., based on analyzing the message as containing an @mention for invoking the second LLM agent. At 506, based on the determining, a consent request for consent of a user to invoke the second LLM agent is provided via the user interface. At 508, the consent of the user to invoke the second LLM agent is received within the context of the user interface. At 510, upon receiving the consent of the user to invoke the second LLM agent, the second LLM agent is invoked within the context of the user interface.

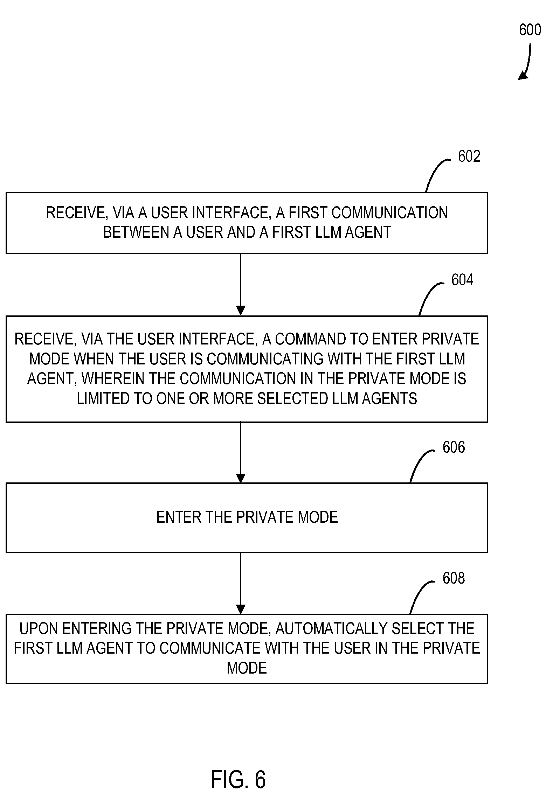

FIG. 6 is a flowchart illustrating an example method 600 for enabling security, privacy, and data use restrictions in group communication with multiple LLM chatbots or LLM agents. In some examples, the method 600 is executed or otherwise performed in a system such as system 100 of FIG. 1. At 602, a first communication between a user and a first LLM agent is received via a user interface (such as user interface 110 or LLM agent application user interface 202). At 604, a command to enter private mode is received via the user interface when the user is communicating with the first LLM agent such that the communication in the private mode is limited to one or more selected LLM agents. The one or more selected LLM agents are also visually distinguished in the user interface from the other LLM agents that are not selected for communication in the private mode so that the user knows upfront the LLM agents that have been selected for communication in the private mode. In this way, the user is assured that that the communication in the private mode will not be accessible to all the other LLM agents with which the user might have been in communication with when in the normal mode (i.e., before entering the private mode).

At 606, in response to the command, the private mode is entered for communication. At 608, upon entering the private mode, the first LLM agent is automatically selected to communicate with the user in the private mode. In this example, the first LLM agent is automatically selected because the first LLM agent is the one with which the user was communicating before entering the private mode. Therefore, the user does not have to select the first LLM agent upon entering the private mode which advantageously saves on at least the processing and network resource usage requirements.

In some examples, a selection of a second LLM agent is received via the user interface when communicating with the first LLM agent in the private mode and in response to the selection of the second LLM agent, the second LLM agent is automatically enabled to communicate with the user in the private mode. In some examples, the first communication between the user and the first LLM agent is analyzed and based on the analysis, a consent request for consent of the user to invoke a second LLM agent is provided via the user interface. The consent of the user to invoke the second LLM agent is received within the context of the user interface and upon receiving the consent of the user, the second LLM agent is invoked within the context of the user interface.

In some examples, a second communication between the user and the first LLM agent in the private mode is received and analyzed. Based on the analyzing, a consent request for consent of the user to invoke a second LLM agent is provided via the user interface. The consent of the user to invoke the second LLM agent is received within the context of the user interface. Upon receiving the consent of the user to invoke the second LLM agent, the second LLM agent is invoked within the context of the user interface in the private mode.

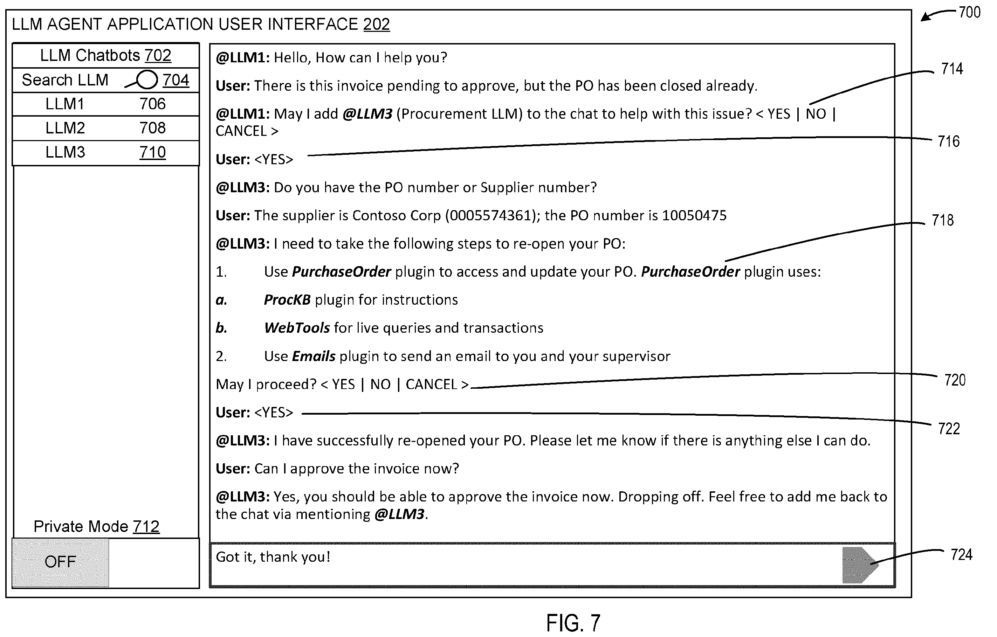

FIG. 7 illustrates an example user interface (UI) 700 for enabling security, privacy, and data use restrictions in group communication with multiple LLM chatbots or LLM agents. The UI 700 represents LLM chatbot or LLM agent application user interface 202 discussed with respect to FIG. 2. In this example UI, user begins communication with first LLM agent (e.g., LLM1) and during the communication, LLM1 sends a consent request to add LLM3 in a first portion of the UI 202 as illustrated at 714. The user provides the consent at 716 and the user starts communicating with the LLM3. As illustrated at 718, LLM3 informs the user, within the context of the first portion of the UI 202, about the intermediate operations for which LLM3 will need to add certain plugins and/or web tools. In this way, no unwanted operation can be performed by the LLM agents without the consent of the user thereby providing security (e.g., accidental sharing of data with incorrect plugin, sending email to unintended recipient, etc.), transparency, and control to the user. For even intermediate operations, the LLM3 seeks consent of the user at 720. At 722, the user provides the consent to perform the intermediate operations and the communication continues with LLM3.

In a second portion of the LLM agent application UI 202, the LLM chatbots or LLM agents are listed below 702. For example, user can search for LLM agents at 704 and the LLM agents available for this session of communication with the user are listed (e.g., LLM1 at 706, LLM2 at 708, and LLM3 at 710). In the UI 700, the user has communicated with LLM1 and LLM3 while LLM2 is also available for communication. The second portion of the LLM agent application UI 202 also illustrates that the private mode is turned off (as shown at 712 in the UI 700), which implies that session data is available to and may be shared with listed LLMs as needed. User can enter a message in a third portion of the UI 700 and select button 724 to send the message directed to a particular LLM agent (e.g., with @mention indication in the message) or to the LLM agent with which the user is currently communicating.

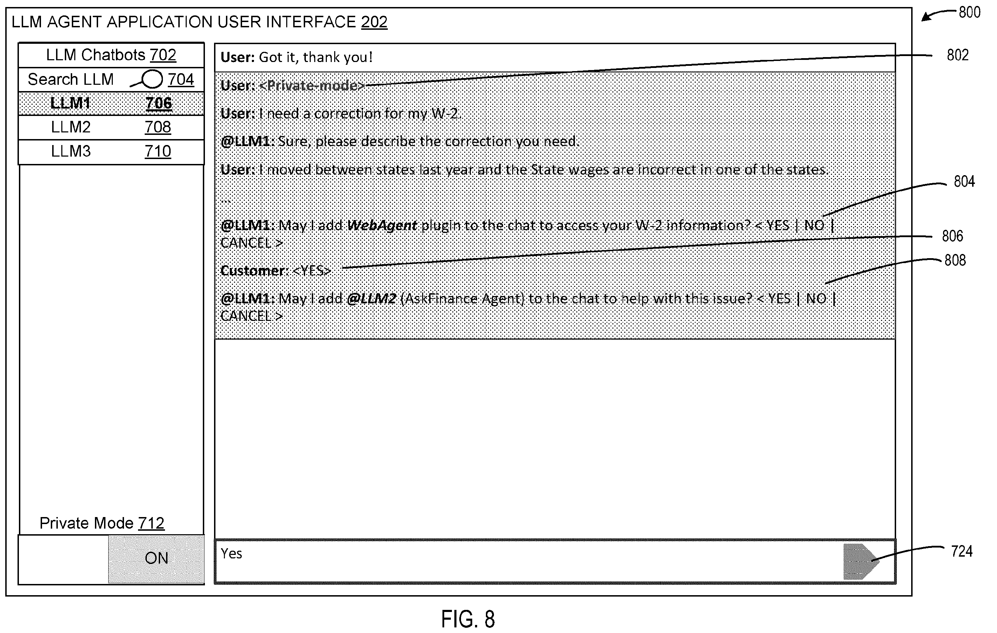

FIG. 8 illustrates an example user interface (UI) 800 for enabling security, privacy, and data use restrictions in group communication with multiple LLM chatbots or LLM agents. UI 800 continues the communication session illustrated in UI 700. At 802, private mode of communication is turned on, such as by the UI control 712 for the private mode or by entering the command to turn on private mode in the third portion of the UI 800 and selecting UI control 724. The indication of turning on of the private mode is visually provided via UI control 712 and within the context of the first portion of the UI 800. The LLM agents involved in the private mode of communication are visually distinguished from other LLM agents listed in the second portion of the UI 800 (e.g., LLM1 at 706 is visually distinct from LLM2 at 708 and LLM3 at 710 in the UI 800). LLM1 at 706, LLM2 at 708, and LLM3 at 710 may be represented by icons. The icon for LLM1 at 706 may be visually distinguished, such as by flashing of the icon corresponding to the LLM1 at 706 that is communicating in the private mode from other icons LLM2 at 708 and LLM3 at 710 that are not in the private mode (at least as shown in UI 800).

Within the private mode, a consent request at 804 may be provided to add a plugin within the context of the first portion of the UI 800. At 806, a consent from the user is provided in-context and again a consent request to add LLM2 is provided in-context at 808. The user may provide the consent by entering in the third portion of the UI 800 and selecting the UI control 724 (as shown in UI 800). In some examples, the consent may be provided by other means e.g., by a spoken command or by selecting from YES/NO/CANCEL buttons or other user interface elements that may be provided in the UI 800 e.g., in the second portion of the UI 800 (not shown). In some examples, the consent request that is provided in-context in the UI 800 has the consent options individually enabled for selection by the user (not shown) so that the user can directly select from within the in-context consent request to provide the consent instead of providing the consent by entering in the third portion of the UI 800.

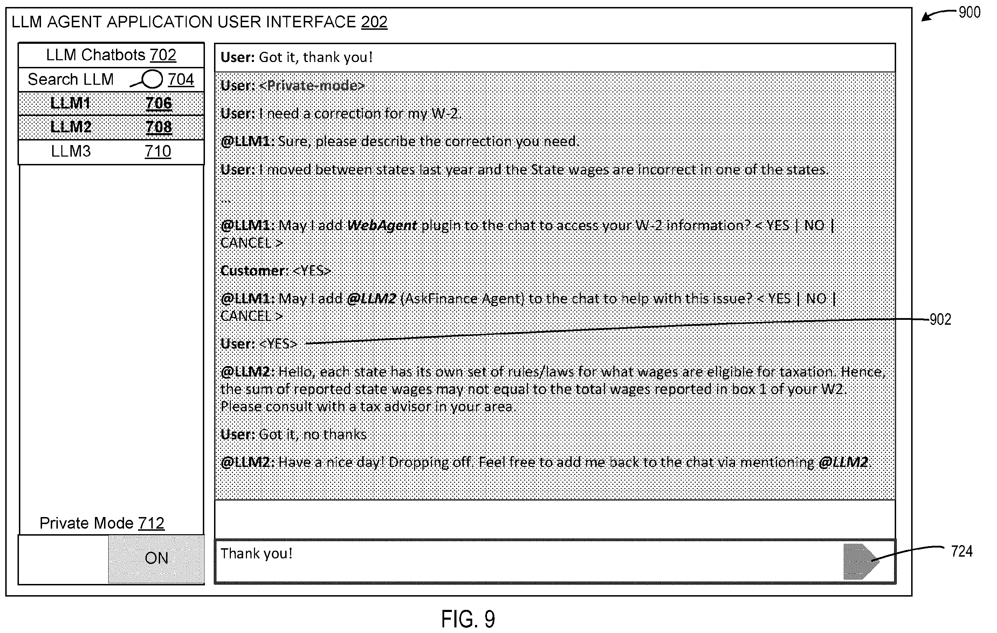

Upon entering the consent by entering in the third portion of the UI 800 and selecting the UI control 724 (as shown in UI 800), the UI 800 transitions to UI 900 as illustrated in FIG. 9. As soon as the user has provided consent to include LLM2 in the private mode of communication (e.g., at 902), the LLM2 at 708 (included in private mode) transitions to distinguish from LLM3 at 710 (not included in private mode) in the second portion of the UI 900. The user may then continue communication with LLM2 in the private mode and the user may acknowledge LLM2 by entering in the third portion of the UI 900 and selecting the UI control 724.

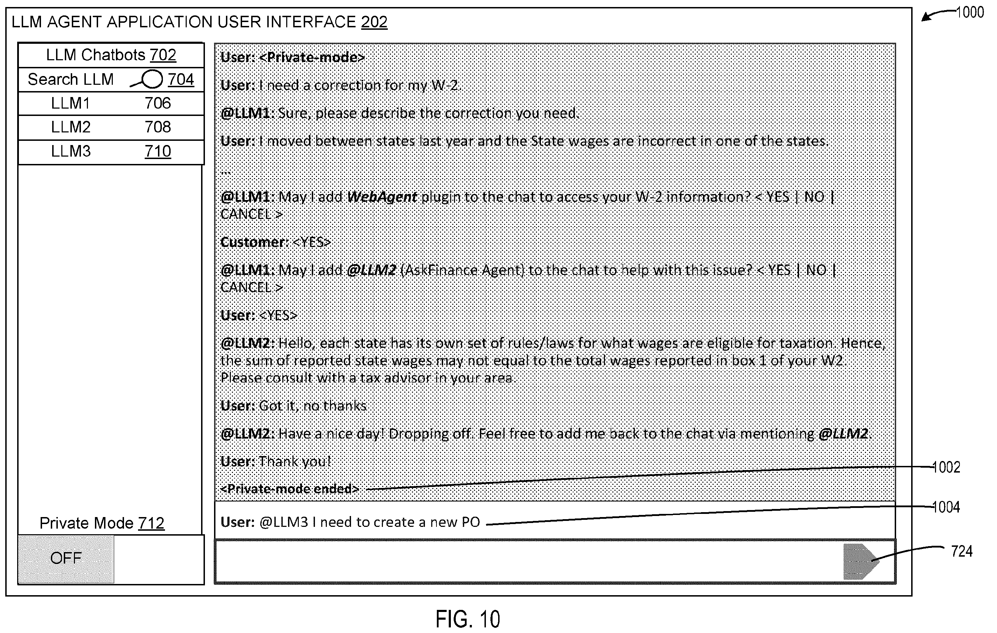

FIG. 10 illustrates an example user interface (UI) 1000 for enabling security, privacy, and data use restrictions in group communication with multiple LLM chatbots or LLM agents. The communication session started in UI 700 that transitions to UI 800 that further transitions to UI 900 that subsequently transitions to UI 1000. At 1002, the user turns off the private mode e.g., by moving the UI control 712, in the second portion of the UI 1000, to off position. In some other examples, a command to turn off the private mode may be provided in the third portion of the UI and selecting UI control 724. As soon as the private mode is turned off, the LLM1 at 706 and LLM2 at 708 (represented in second portion of the UI 900 to be in private mode) transition back to normal mode (i.e., LLM1 at 706, LLM2 at 708, and LLM3 at 710 are not in private mode in UI 1000).

After turning off the private mode, the user communicates with the LLM3 at 1004. In examples of the disclosure, the communication context in the private mode is not passed on to the LLM agents not involved in the private mode of communication. In some examples, the communication context in the private mode is not passed on to any LLM agent irrespective of whether they were involved in private mode of communication with the user or not.

Examples of the disclosure apply to other variants of LLMs such as Small Language Model, Tiny Language Model, or any other language models with Generative AI capabilities. In some examples, user consent is required for operations performed by an LLM agent before executing them. These operations may include not only invoking other LLM agents, but also non-LLM related operations such as sending email or invoking other non-LLM related tools and components (e.g., executing a spreadsheet application for performing some operation, etc.).

### Additional Examples

Examples of the disclosure introduce a multiple LLM agent group chat paradigm that provides full-control and transparency to the user on what data is shared with which LLM agent and other AI system components. A user can interact with multiple LLM agents in the same conversation regardless of the LLM agent or chat application the customer used to initiate the conversation. For example, the user, when communicating with a LLM agent, adds a new LLM agent to the conversation using @mention. The user can also search and add or remove LLM agents from the conversation via the user interface controls. A LLM agent can add other LLM agents to the conversation with user's consent as needed. A LLM agent can remove other LLM agents that it added to the conversation when their job is done. If an LLM agent needs to use plugins or tools to execute intermediate steps, the LLM agent provides details and obtains the user's consent to help ensure full transparency and user confirmation.

The user can turn on private mode to mark any part of the chat conversation as private and limit it to selected LLM agents. For example, user uses private mode for chat conversation about their W-2. The user is requested to provide in-context consent within the chat as and when needed.

Examples of the disclosure provide an ability to control lateral (from one component to another) exposure to content. By intermediating all communication between AI system components and consistently applying security, privacy, and data protection policies, the solution obviates the implicit trust relationships between AI components and constrains the ability of attackers to compromise any one component or resource in the AI system to gain unauthorized access to other resources, inject malicious behavior into other components, exfiltrate sensitive data, or disrupt operations. The on-behalf-of (OBO) user access flow to all AI system components in a communication session, instead of only OBO access to the main chat application which in turn has implicit service level trust and access to other system components. OBO describes the scenario of a web API using an identity other than its own to call another web API. Referred to as delegation in OAuth standard, the intent is to pass a user's identity and permissions through the request chain. Aspects of the disclosure prevent unauthorized data leaks which is especially important in securing AI systems such as the system 100.

The security module intermediates and secures all information flow between AI system components, enables privacy, and enforces data use restrictions for legal & regulatory compliance. The security module can be implemented in multiple ways, for example, as a system component, a service, or an Open API plugin.

The security module handles all communication between the user, the main LLM agent or chat application (e.g., UI 110 or UI 202), and the other LLM agents engaged in the conversation. Some examples of LLM chatbots or LLM agents are OpenAI's ChatGPT, Microsoft^{®} Copilot, Google^{®} Assistant, Apple^{®} Siri, etc. The security module performs authentication and authorization using any authenticator and authorizer (e.g., Microsoft Authentication Library (MSAL)) that implements industry standard Open ID Connect and Oauth2.0 protocols. The security module uses the authorization code flow (e.g., with proof of key code exchange (PKCE)) to obtain required access tokens on-behalf-of (OBO) the user from the authenticator and authorizer, that may also provide service authentication and authorization or managed identity for cloud-based AI systems. The security module provides capability to mark any part of the chat conversation as "private". The private mode restricts chat conversation to only LLM agents and plugins explicitly selected by the user.

The security module provides the capability to offer control and transparency to users on how their data is shared between multiple LLM agents and to obtain in-context user consent as and when required by the LLM agents, plugins, and tools. The security module provides application programming interface (APIs) to integrate with all components in the AI System such as front-end app, LLM agents, plugins, web tools, etc. In some examples, the security module intermediates all chat communication between the AI systems components and applies security, privacy, safety, and data use controls that can be added and configured as needed.

In some examples, the security module blocks malicious instructions to suppress intermediate execution steps from the user. The security module as described herein intermediates controls for legal and regulatory compliance, such as privacy compliance including California Privacy Rights Act (CPRA), General Data Protection Regulation (GDPR), Children's Online Privacy Protection Rule (COPPA), and the like, using encryption, anonymization techniques, and privacy-enhancing technologies. Aspects of the disclosure also enable safety controls, for example, filtering links to images. The security module provides data integrity on all communication between AI systems components using industry standard techniques such as digital signatures and message authentication codes, enforcing full transparency and user consent, and enforcing cross-session and cross-mode (open/private) isolation on data sharing. In some examples, security module provides non-repudiation mechanisms using cryptographic techniques, such as digital signatures or digital certificates, to provide irrefutable evidence of the origin, content, and integrity of communications or transactions. The security module may be distributed securely as a digitally signed library and might be potentially open sourced for increased transparency and industry wide adoption.

In some examples, security controls 206 apply content safety checks consistently across all interactions between the components to prevent inappropriate image displays having explicit content not suitable for the user, block indirect execution of plugin by LLM agent from a tampered website or document with malicious content obtained via webtool or document search, block instructions to suppress displaying intermediate steps to hide an attack and deceive the user into consent, and the like.

Aspects of the disclosure obtain user consent for operations performed by an LLM agent before executing them. Examples of such operations include not only invoking other LLM agents, but also non-LLM related operations such as sending email or invoking other non-LLM related tools and components. The transparency and in-context consent prevent LLM agents from performing malicious, unauthorized, or unintended operation on behalf of the user. Communication with the user happens via response from an LLM chatbot or LLM agent.

As described herein, an LLM chatbot or an LLM agent is a type of AI system designed to assist human operators or users in performing complex tasks, providing guidance, suggestions, and automation to enhance productivity, efficiency, and decision-making. LLM chatbots or LLM agents typically leverage machine learning; natural language, audio, image, and video processing and generation; computer vision; speech recognition and synthesis; and other AI techniques to understand user inputs, analyze contextual information, and provide relevant support or assistance in real-time. LLM chatbots or the LLM agents may be deployed in various domains, including software development, customer support, healthcare, and transportation, to augment human capabilities and improve overall performance.

As described herein, the security module provides the functionality described and illustrated herein, and may be implemented as logic in hardware, software, and/or firmware.

As described herein, a plugin is a software component or module that integrates AI functionality into an existing software application or system. The AI plugin typically extends the capabilities of the host application by providing specialized AI-based features, services, or algorithms that enhance its functionality, performance, or user experience. The plugin may leverage machine learning, natural language processing, computer vision, or other AI techniques to analyze data, make predictions, automate tasks, or assist users in achieving specific objectives. AI plugins are often designed to be modular and interoperable, allowing them to be easily integrated into different software environments and architectures.

As described herein, a LLM is a statistical or machine learning-based model that captures the probability distribution of sequences of words or tokens in a natural language. It is trained on patterns and relationships between words in a corpus of text data and uses this knowledge to predict the likelihood of encountering specific words or sequences of words in a given context. LLMs are trained on large datasets of text, such as books, articles, or web pages, and can be used for various natural language processing tasks, including text generation, speech recognition, machine translation, and sentiment analysis. The primary goal of a language model is to estimate the probability of observing a particular sequence of words, enabling it to generate coherent and contextually relevant text or make informed predictions about language-based tasks.

### Exemplary Operating Environment

The present disclosure is operable with a computing apparatus as a functional block diagram 1100 in FIG. 11. In an example, components of a computing apparatus 1118 are implemented as a part of an electronic device according to one or more embodiments described in this specification. The computing apparatus 1118 comprises one or more processors 1119 which may be microprocessors, controllers, or any other suitable type of processors for processing computer executable instructions to control the operation of the electronic device. Alternatively, or in addition, the processor 1119 is any technology capable of executing logic or instructions, such as a hard-coded machine. In some examples, platform software comprising an operating system 1120 or any other suitable platform software is provided on the apparatus 1118 to enable application software 1121 to be executed on the device. In some examples, security, privacy, and data use restrictions in group communication with multiple large LLM agents as described herein is accomplished by software, hardware, and/or firmware.

In some examples, computer executable instructions are provided using any computer-readable media that is accessible by the computing apparatus 1118. Computer-readable media include, for example, computer storage media such as a memory 1122 and communications media. Computer storage media, such as a memory 1122, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media does not include communication media. Therefore, a computer storage medium is not a propagating signal. Propagated signals are not examples of computer storage media. Although the computer storage medium (the memory 1122) is shown within the computing apparatus 1118, it will be appreciated by a person skilled in the art, that, in some examples, the storage is distributed or located remotely and accessed via a network or other communication link (e.g., using a communication interface 1123).

Further, in some examples, the computing apparatus 1118 comprises an input/output controller 1124 configured to output information to one or more output devices 1125, for example a display or a speaker, which are separate from or integral to the electronic device. Additionally, or alternatively, the input/output controller 1124 is configured to receive and process an input from one or more input devices 1126, for example, a keyboard, a microphone, or a touchpad. **In** one example, the output device 1125 also acts as the input device. An example of such a device is a touch sensitive display. The input/output controller 1124 may also output data to devices other than the output device, e.g., a locally connected printing device. In some examples, a user provides input to the input device(s) 1126 and/or receives output from the output device(s) 1125.

The functionality described herein can be performed, at least in part, by one or more hardware logic components. According to an embodiment, the computing apparatus 1118 is configured by the program code when executed by the processor 1119 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

An example system comprises: a processor; and a memory storing instructions that upon execution by the processor perform operations comprising: receiving a first message directed to a first large language model (LLM) chatbot; providing, via a user interface, a response to the first message from the first LLM chatbot; analyzing one or more of the first message and the response; based on the analyzing, providing, via the user interface, a consent request for consent of a user to invoke a second LLM chatbot; receiving the consent of the user to invoke the second LLM chatbot within the context of the user interface; and upon receiving the consent of the user to invoke the second LLM chatbot, invoking the second LLM chatbot within the context of the user interface.

An example computerized method comprises receiving, via a user interface, a first message directed to a first large language model (LLM) agent; determining that the first message is to invoke a second LLM agent; based on the determining, providing, via the user interface, a consent request for consent of a user to invoke the second LLM agent; receiving the consent of the user to invoke the second LLM agent, wherein the consent of the user is received within the context of the user interface; and upon receiving the consent of the user to invoke the second LLM agent, invoking the second LLM agent within the context of the user interface.

An example computer storage medium stores computer-executable instructions that, upon execution by a processor, cause the processor to perform operations comprising: receiving, via a user interface, a first communication between a user and a first large language model (LLM) agent; receiving, via the user interface, a command to enter private mode when the user is communicating with the first LLM agent, wherein the communication in the private mode is limited to one or more selected LLM agents; in response to the command, entering the private mode; and upon entering the private mode, automatically selecting the first LLM agent to communicate with the user in the private mode.

Alternatively, or in addition to the other examples described herein, examples include any combination of the following:
- upon receiving the consent of the user to invoke the second LLM chatbot: receiving, via the user interface, a second message from the user directed to the second LLM chatbot; forwarding the second message to the second LLM chatbot; receiving, a response to the second message from the second LLM chatbot; and providing, via the user interface, the response to the second message from the second LLM chatbot.
- receiving, via the user interface, a command from the user to turn on private mode; and receiving, via the user interface, a selection of one or more of the first LLM chatbot and the second LLM chatbot for communicating with the user in the private mode, wherein the communication in the private mode is limited to the selected one or more of the first LLM chatbot and the second LLM chatbot.
- analyzing the communication between the user and the selected one or more of the first LLM chatbot and the second LLM chatbot in the private mode; based on the analyzing the communication, providing, via the user interface, another consent request for consent of the user to invoke a third LLM chatbot in the private mode; receiving, via the user interface, the consent of the user to invoke the third LLM chatbot within the context of the user interface; and upon receiving the consent of the user to invoke the third LLM chatbot, automatically selecting the third LLM chatbot for communicating with the user within the context of the user interface in the private mode, wherein the communication in the private mode is limited to the third LLM chatbot and the selected one or more of the first LLM chatbot and the second LLM chatbot.
- receiving, via the user interface, a command from the user to turn off the private mode; and turning off the private mode, wherein communication context between the user and the first, second, or third LLM chatbots is not carried forward upon turning off the private mode.
- wherein the user interface provides an option to search, add, or remove a LLM chatbot.
- wherein the first message comprises one or more of: (1) a privacy condition, and (2) a message history of the user and the first LLM agent based on the privacy condition, wherein the message history of the user and the first LLM agent is secured from the second LLM agent based on the privacy condition.
- receiving, via the user interface, a second message from the user directed to the second LLM agent; forwarding the second message to the second LLM agent; receiving, a response to the second message from the second LLM agent; and providing, via the user interface, the response to the second message from the second LLM agent.
- receiving, via the user interface, a command from the user to turn on private mode when the user is communicating with the first LLM agent, wherein communication of the user in the private mode is limited to selected LLM agents; and receiving, via the user interface, a selection of one or more of the first LLM agent and the second LLM agent for communicating with the user in the private mode, wherein the communication in the private mode is limited to the selected one or more of the first LLM agent and the second LLM agent.
- analyzing the communication between the user and the selected one or more of the first LLM agent and the second LLM agent in the private mode; based on the analyzing, providing, via the user interface, another consent request for consent of the user to invoke a third LLM agent in the private mode; receiving, via the user interface, the consent of the user to invoke the third LLM agent within the context of the user interface; and upon receiving the consent of the user to invoke the third LLM agent, automatically selecting the third LLM agent for communicating with the user within the context of the user interface in the private mode, wherein the communication in the private mode is limited to the third LLM agent and the selected one or more of the first LLM agent and the second LLM agent.
- receiving, via the user interface, a command from the user to turn off the private mode; and turning off the private mode, wherein communication context between the user and the first, second, or third LLM agents is not carried forward upon turning off the private mode.
- receiving, via the user interface, a command from the user to turn on private mode when the user is communicating with the first LLM agent, wherein the communication in the private mode is limited to a selected LLM agent; in response to the command, turning on the private mode; and automatically selecting the first LLM agent to communicate with the user in the private mode.

- receiving, via the user interface, a selection of a second LLM agent when communicating with the first LLM agent in the private mode; and in response to the selection of the second LLM agent, automatically enabling the second LLM agent to communicate with the user in the private mode.
- wherein the user interface provides an option to search, add, or remove a LLM agent.
- analyzing the first communication between the user and the first LLM agent; based on the analyzing, providing, via the user interface, a consent request for consent of the user to invoke a second LLM agent; receiving the consent of the user to invoke the second LLM agent within the context of the user interface; and upon receiving the consent of the user to invoke the second LLM agent, invoking the second LLM agent within the context of the user interface.
- receiving, via the user interface, a second communication between the user and the first LLM agent in the private mode; analyzing the second communication between the user and the first LLM agent; based on the analyzing, providing, via the user interface, a consent request for consent of the user to invoke a second LLM agent; receiving, via the user interface, the consent of the user to invoke the second LLM agent within the context of the user interface; and upon receiving the consent of the user to invoke the second LLM agent, invoking the second LLM agent within the context of the user interface in the private mode.
- receiving, via the user interface, a second communication between the user and the first LLM agent in the private mode; receiving, via the user interface, a command from the user to turn off the private mode; and turning off the private mode, wherein communication context of the second communication between the user and the first LLM agent is not carried forward upon turning off the private mode.

Any range or device value given herein may be extended or altered without losing the effect sought, as will be apparent to the skilled person.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts.

**In** some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a processor; and
a memory storing instructions that upon execution by the processor perform operations comprising:
receiving a first message directed to a first large language model (LLM) chatbot;
providing, via a user interface, a response to the first message from the first LLM chatbot;
analyzing one or more of the first message and the response;
based on the analysis, providing, via the user interface, a consent request for consent of a user to invoke a second LLM chatbot;
receiving the consent of the user to invoke the second LLM chatbot within the context of the user interface; and
upon receiving the consent of the user to invoke the second LLM chatbot, invoking the second LLM chatbot within the context of the user interface.

2. The system of claim 1, wherein the instructions upon execution by the processor perform further operations comprising:
upon receiving the consent of the user to invoke the second LLM chatbot:
receiving, via the user interface, a second message from the user directed to the second LLM chatbot;
forwarding the second message to the second LLM chatbot;
receiving, a response to the second message from the second LLM chatbot; and
providing, via the user interface, the response to the second message from the second LLM chatbot.

3. The system of claim 1 or 2, wherein the instructions upon execution by the processor perform further operations comprising:
receiving, via the user interface, a command from the user to turn on private mode; and
receiving, via the user interface, a selection of one or more of the first LLM chatbot and the second LLM chatbot for communicating with the user in the private mode, wherein the communication in the private mode is limited to the selected one or more of the first LLM chatbot and the second LLM chatbot.

4. The system of claim 3, wherein the instructions upon execution by the processor perform further operations comprising:
analyzing the communication between the user and the selected one or more of the first LLM chatbot and the second LLM chatbot in the private mode;
based on the analysis of the communication, providing, via the user interface, another consent request for consent of the user to invoke a third LLM chatbot in the private mode;
receiving, via the user interface, the consent of the user to invoke the third LLM chatbot within the context of the user interface; and
upon receiving the consent of the user to invoke the third LLM chatbot, automatically selecting the third LLM chatbot for communicating with the user within the context of the user interface in the private mode, wherein the communication in the private mode is limited to the third LLM chatbot and the selected one or more of the first LLM chatbot and the second LLM chatbot.

5. The system of claim 4, wherein the instructions upon execution by the processor perform further operations comprising:
receiving, via the user interface, a command from the user to turn off the private mode; and
turning off the private mode, wherein communication context between the user and the first, second, or third LLM chatbots is not carried forward upon turning off the private mode.

6. The system of one of claims 1 to 5, at least one of:
wherein the user interface provides an option to one or more of: search, add, or remove a LLM chatbot; and
wherein the instructions upon execution by the processor perform further operations comprising:
receiving, via the user interface, a command from the user to turn on private mode when the user is communicating with the second LLM chatbot, wherein the communication in the private mode is limited to one or more selected LLM chatbots;
turning on the private mode; and
automatically selecting the second LLM chatbot to communicate with the user in the private mode.

7. A computerized method comprising:
receiving, via a user interface, a first message directed to a first large language model (LLM) agent;
determining that the first message is to invoke a second LLM agent;
based on the determination, providing, via the user interface, a consent request for consent of a user to invoke the second LLM agent;
receiving the consent of the user to invoke the second LLM agent, wherein the consent of the user is received within the context of the user interface; and
upon receiving the consent of the user to invoke the second LLM agent, invoking the second LLM agent within the context of the user interface.

8. The computerized method of claim 7, at least one of:
wherein the first message comprises one or more of: (1) a privacy condition, and (2) a message history of the user and the first LLM agent based on the privacy condition, wherein the message history of the user and the first LLM agent is secured from the second LLM agent based on the privacy condition; and
further comprising:
receiving, via the user interface, a second message from the user directed to the second LLM agent;
forwarding the second message to the second LLM agent;
receiving, a response to the second message from the second LLM agent; and
providing, via the user interface, the response to the second message from the second LLM agent.

9. The computerized method of claim 7 or 8, further comprising:
receiving, via the user interface, a command from the user to turn on private mode when the user is communicating with the first LLM agent, wherein communication of the user in the private mode is limited to selected LLM agents; and
receiving, via the user interface, a selection of one or more of the first LLM agent and the second LLM agent for communicating with the user in the private mode, wherein the communication in the private mode is limited to the selected one or more of the first LLM agent and the second LLM agent.

10. The computerized method of claim 9, at least one of:
further comprising:
analyzing the communication between the user and the selected one or more of the first LLM agent and the second LLM agent in the private mode;
based on the analysis of the communication, providing, via the user interface, another consent request for consent of the user to invoke a third LLM agent in the private mode;
receiving, via the user interface, the consent of the user to invoke the third LLM agent within the context of the user interface; and
upon receiving the consent of the user to invoke the third LLM agent, automatically selecting the third LLM agent for communicating with the user within the context of the user interface in the private mode, wherein the communication in the private mode is limited to the third LLM agent and the selected one or more of the first LLM agent and the second LLM agent; and
further comprising:
receiving, via the user interface, a command from the user to turn off the private mode; and
turning off the private mode, wherein communication context between the user and the first, second, or third LLM agents is not carried forward upon turning off the private mode.

11. The computerized method of one of claims 7 to 10, further comprising:
receiving, via the user interface, a command from the user to turn on private mode when the user is communicating with the first LLM agent, wherein the communication in the private mode is limited to a selected LLM agent;
turning on the private mode; and
automatically selecting the first LLM agent to communicate with the user in the private mode.

12. A computer storage medium storing computer-executable instructions that, upon execution by a processor, cause the processor to perform operations comprising:
receiving, via a user interface, a first communication between a user and a first large language model (LLM) agent;
receiving, via the user interface, a command to enter private mode when the user is communicating with the first LLM agent, wherein the communication in the private mode is limited to one or more selected LLM agents;
entering the private mode; and
upon entering the private mode, automatically selecting the first LLM agent to communicate with the user in the private mode.

13. The computer storage medium of claim 12, at least one of:
wherein the instructions upon execution by the processor further cause the processor to perform operations comprising:
receiving, via the user interface, a selection of a second LLM agent when communicating with the first LLM agent in the private mode; and
based on the selection of the second LLM agent, automatically enabling the second LLM agent to communicate with the user in the private mode;
wherein the instructions upon execution by the processor further cause the processor to obtain user consent for an operation to be performed by the first LLM agent before the first LLM agent executes the operation, wherein the operation includes invoking another LLM agent or performing any functionality that is not within a current scope of security or privacy; and
wherein the instructions upon execution by the processor further cause the processor to perform operations comprising:
analyzing the first communication between the user and the first LLM agent;
based on the analysis, providing, via the user interface, a consent request for consent of the user to invoke a second LLM agent;
receiving the consent of the user to invoke the second LLM agent within the context of the user interface; and
upon receiving the consent of the user to invoke the second LLM agent, invoking the second LLM agent within the context of the user interface.

14. The computer storage medium of claim 12 or 13, wherein the instructions upon execution by the processor further cause the processor to perform operations comprising:
receiving, via the user interface, a second communication between the user and the first LLM agent in the private mode;
analyzing the second communication between the user and the first LLM agent;
based on the analysis, providing, via the user interface, a consent request for consent of the user to invoke a second LLM agent;
receiving, via the user interface, the consent of the user to invoke the second LLM agent within the context of the user interface; and
upon receiving the consent of the user to invoke the second LLM agent, invoking the second LLM agent within the context of the user interface in the private mode.

15. The computer storage medium of claim 14, wherein the instructions upon execution by the processor further cause the processor to perform operations comprising:
receiving, via the user interface, a second communication between the user and the first LLM agent in the private mode;
receiving, via the user interface, a command from the user to turn off the private mode; and
turning off the private mode, wherein communication context of the second communication between the user and the first LLM agent is not carried forward upon turning off the private mode.
